# EUROPEAN PATENT SPECIFICATION

(11) **EP 3 288 157 B1**
(45) Date of publication and mention of the grant of the patent: **18.03.2026**
(21) Application number: 17187645.1
(22) Date of filing: 24.08.2017
(51) Int. Cl.: H02K 5/173, B29C 45/50

(54) **INJECTION MOLDING MACHINE**
SPRITZGIESSMASCHINE
MACHINE DE MOULAGE À INJECTION

(30) Priority: 26.08.2016 JP 2016166243
(43) Date of publication of application: 28.02.2018
(73) Proprietor: Sumitomo Heavy Industries, Ltd., Tokyo 141-6025 (JP)
(72) Inventor: SAWAYA, Atsushi, Chiba-shi, Chiba 263-0001 (JP); ISHII, Yoshihisa, Chiba-shi, Chiba 263-0001 (JP)
(74) Representative: Louis Pöhlau Lohrentz

(56) References cited:
- EP-A1- 0 780 955
- EP-A1- 1 674 233
- DE-A1- 10 214 276
- DE-A1- 19 818 059
- DE-U1- 29 510 987
- JP-A- S61 203 841
- US-A1- 2003 062 796
- US-A1- 2005 155 444

## Description

### BACKGROUND OF THE INVENTION

### Field of the Invention

The present invention relates to an injection molding machine.

### Description of Related Art

German patent application DE 198 18 059 A1 discloses a small electric motor in which a rotor shaft is held by a bearing and a spring acts on the bearing in axial direction.

International Publication No. WO 2005/037519 discloses an electric injection molding machine which includes a driven portion, an electric motor for operating the driven portion, and a movement direction conversion portion which is disposed between the electric motor and the driven portion and converts a rotary motion of a rotation generated by driving the electric motor into a linear motion.

The injection molding machine includes various motors. The motor includes a stator, a bearing which is held to the stator, and a rotor which is rotatably supported by the bearing.

A drive shaft which rotates and moves linearly by a rotary motion of the rotor is provided inside the rotor of the motor.

The drive shaft is splined to the rotor.

In the related art, when the drive shaft is driven, vibrations in the bearing of the motor increase, and thus, failures may occur due to impact or the like.

### SUMMARY OF THE INVENTION

The present invention is made in consideration of the above-described problems, and an object thereof is to provide an injection molding machine in which vibrations in a bearing of a motor decrease when a drive shaft is driven.

In order to achieve the object, according to an aspect of the present invention, there is provided an injection molding machine according to independent claim 1.

According to another aspect of the present invention, there is provided an injection molding machine, including: a plasticizing motor which rotates an injection member; and a drive shaft in which a rotation of the plasticizing motor is transmitted, in which the plasticizing motor includes a stator, a bearing which is held to the stator, a rotor which is rotatably supported by the bearing, and a biasing member configured to bias the bearing with respect to the stator toward one side in an axial direction, wherein the drive shaft is splined to the rotor of the plasticizing motor, and wherein a biasing force of the biasing member is set to be larger than a thrust force acting on the bearing in a direction opposite to that of the biasing force.

According to the aspect of the present invention, the injection molding machine is provided in which vibrations in the bearing of the motor decrease when the drive shaft is driven.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing an injection unit according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

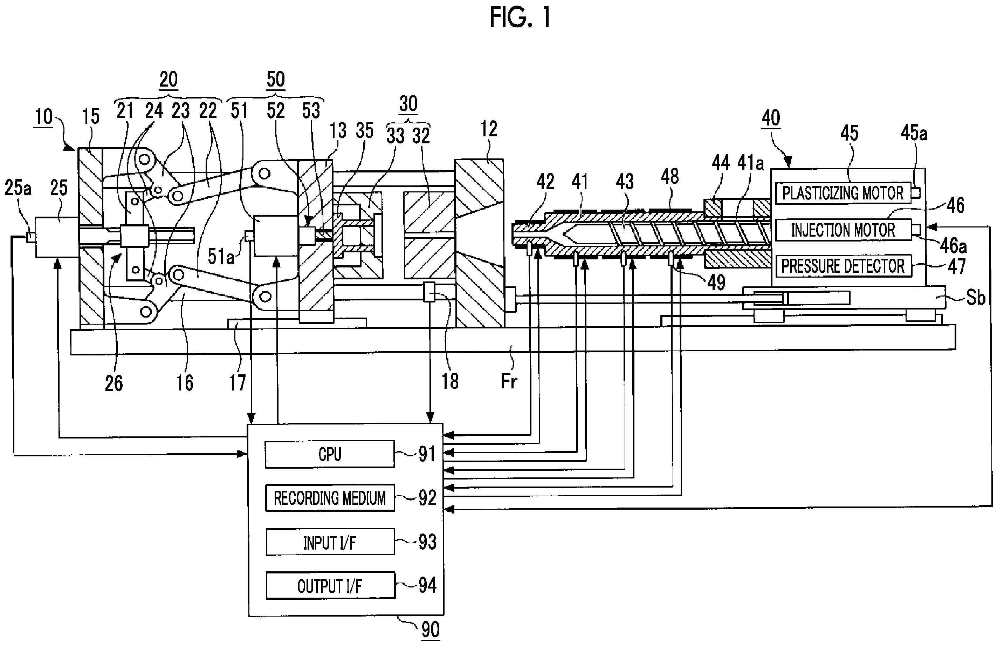

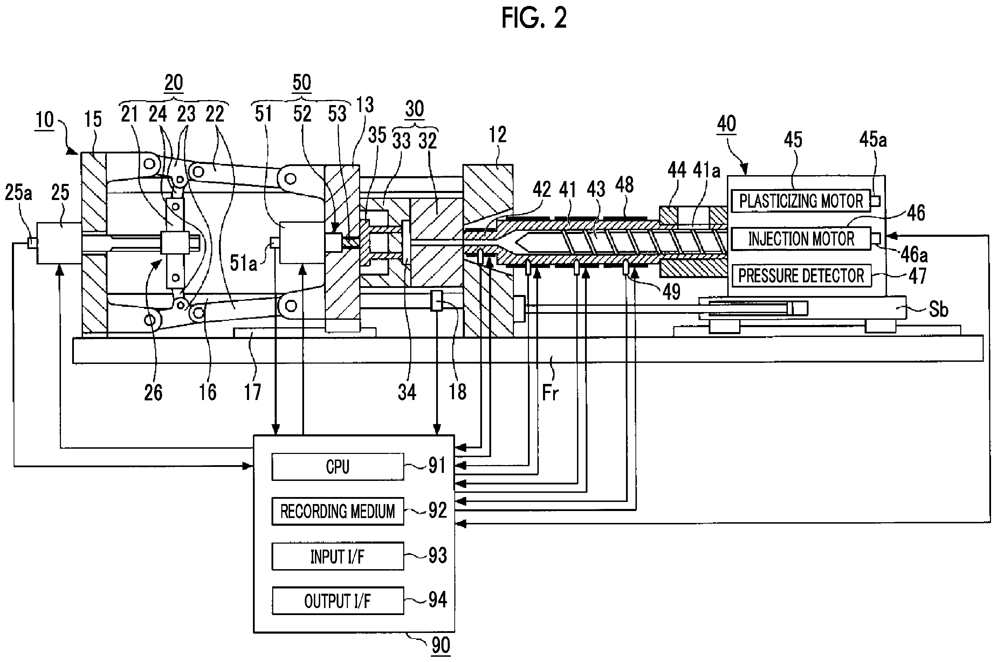

Fig. 1 is a view showing a state when a mold opening of an injection molding machine according to an embodiment is completed. Fig. 2 is a view showing a state when a mold of the injection molding machine according to the embodiment is clamped. As shown in Figs. 1 and 2, the injection molding machines include a frame Fr, a mold clamping unit 10, an injection unit 40, an ejector unit 50, and a controller 90.

First, the mold clamping unit 10 and the ejector unit 50 will be described. In the descriptions of the mold clamping unit 10 and the ejector unit 50, a movement direction (right direction in Figs. 1 and 2) of a movable platen 13 when a mold is closed is defined as a front side, and a movement direction (left direction in Figs. 1 and 2) of the movable platen 13 when the mold is open is defined as a rear side.

The mold clamping unit 10 performs closing, clamping, and opening of a mold unit 30. For example, the mold clamping unit 10 is a horizontal type clamping unit and mold opening and closing directions are a horizontal direction. The mold clamping unit 10 includes a stationary platen 12, the movable platen 13, a toggle support 15, a tie bar 16, a toggle mechanism 20, a mold clamping motor 25, and a motion conversion mechanism 26.

The stationary platen 12 is fixed to the frame Fr. A stationary mold 32 is attached to a surface of the stationary platen 12 facing the movable platen 13.

The movable platen 13 is movable in the mold opening and closing directions with respect to the frame Fr. A guide 17 which guides the movable platen 13 is placed on the frame Fr. A movable mold 33 is attached to a surface of the movable platen 13 facing the stationary platen 12.

The movable platen 13 moves forward or backward with respect to the stationary platen 12, and thus, closing, clamping, and opening of the mold are performed. The mold unit 30 is configured of the stationary mold 32 and the movable mold 33.

The toggle support 15 is connected so as to be separated from the stationary platen 12, and is placed on the frame Fr to be movable in mold opening and closing directions. In addition, the toggle support 15 may be movable along a guide which is placed on the frame Fr. The guide of the toggle support 15 may be also used as the guide 17 of the movable platen 13.

In addition, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at intervals by the tie bar 16. A plurality of tie bars 16 may be used. The tie bars 16 are parallel in the mold opening and closing directions and extend according to a mold clamping force. A mold clamping force detector 18 is provided in at least one tie bar 16. The mold clamping force detector 18 detects the mold clamping force by detecting strain of the tie bar 16 and sends signals indicating detection results to the controller 90.

In addition, the mold clamping force detector 18 is not limited to a strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is disposed between the movable platen 13 and the toggle support 15 and moves the movable platen 13 in the mold opening and closing directions with respect to the toggle support 15. The toggle mechanism 20 is configured of a crosshead 21, a pair of link groups, or the like. Each link group includes a first link 22 and a second link 23 which is bendably / strechably connected to each other by pins or the like. The first link 22 is attached to the movable platen 13 so as to be oscillated by pins or like and the second link 23 is attached to the toggle support 15 so as to be oscillated by pins or the like. The second link 23 is attached to the crosshead 21 via a third link 24. If the crosshead 21 moves forward or backward with respect to the toggle support 15, the first link 22 and the second link 23 are bent and stretched and the movable platen 13 moves forward or backward with respect to the toggle support 15.

In addition, the configuration of the toggle mechanism 20 is not limited to the configuration shown in Figs. 1 and 2. For example, in Figs. 1 and 2, the number of nodes of each link group is five. However, the number of nodes may be four, and one end portion of the third link 24 may be connected to a node between the first link 22 and the second link 23.

The mold clamping motor 25 is attached to the toggle support 15 and operates the toggle mechanism 20. The mold clamping motor 25 moves the crosshead 21 forward or backward with respect to the toggle support 15, and thus, the first links 22 and the second links 23 are bent and stretched, and the movable platen 13 moves forward or backward with respect to the toggle support 15. The mold clamping motor 25 is directly connected to the motion conversion mechanism 26. However, the mold clamping motor 25 may be connected to the motion conversion mechanism 26 via a belt, a pulley, or the like.

The motion conversion mechanism 26 converts a rotary motion of the mold clamping motor 25 into a linear motion of the crosshead 21. The motion conversion mechanism 26 includes a screw shaft and a screw nut which is screwed to the screw shaft. A ball or a roller may be interposed between the screw shaft and the screw nut.

The mold clamping unit 10 performs a mold closing process, a mold clamping process, a mold opening process, or the like under the control of the controller 90.

In the mold closing process, the mold clamping motor 25 is driven to move the crosshead 21 forward to a mold closing completion position at a set speed. Accordingly, the movable platen 13 moves forward or the movable mold 33 comes into contact with the stationary mold 32. For example, a position or speed of the crosshead 21 is detected using an encoder 25a of the mold clamping motor 25 or the like. The encoder 25a detects the rotary motion of the mold clamping motor 25 and sends signals indicating the detection results to the controller 90.

In the mold clamping process, the mold clamping motor 25 is further driven to further move the crosshead 21 forward from the mold closing completion position to a mold clamping position, and thus, a mold clamping force is generated. When the mold is clamped, a cavity space 34 is formed between the movable mold 33 and the stationary mold 32, and the cavity space 34 is filled with a liquid molding material by the injection unit 40. The filled molding material is solidified, and thus, amoldingproduct is obtained. A plurality of cavity spaces 34 may be provided, and in this case, a plurality of molding products may be simultaneously obtained.

In the mold opening process, the mold clamping motor 25 is driven to move the crosshead 21 backward to a mold opening completion position at a set speed. Accordingly, the movable platen 13 moves backward, and the movable mold 33 is separated from the stationary mold 32. Thereafter, the ejector unit 50 ejects the molding product from the movable mold 33.

In addition, the mold clamping unit 10 of the present embodiment has the mold clamping motor 25 as a drive source. However, the mold clamping unit 10 may have a hydraulic cylinder instead of the mold clamping motor 25. In addition, the mold clamping unit 10 may have a linear motor for opening and closing a mold and may have an electromagnet for clamping a mold.

The ejector unit 50 ejects the molding product from the mold unit 30. The ejector unit 50 includes an ejector motor 51, a motion conversion mechanism 52, and an ejector rod 53.

The ejector motor 51 is attached to the movable platen 13. The ejector motor 51 is directly connected to the motion conversion mechanism 52. However, the ejector motor 51 may be connected to the motion conversion mechanism 52 via a belt, a pulley, or the like.

The motion conversion mechanism 52 converts a rotary motion of the ejector motor 51 into a linear motion of the ejector rod 53. The motion conversion mechanism 52 includes a screw shaft and a screw nut which is screwed to the screw shaft. A ball or a roller may be interposed between the screw shaft and the screw nut.

The ejector rod 53 can move forward or backward through a through-hole of the movable platen 13. A front end portion of the ejector rod 53 comes into contact with a movable member 35 which is disposed to be movable forward or backward inside the movable mold 33. The front end portion of the ejector rod 53 may be connected to the movable member 35 or may not be connected to the movable member 35.

The ejector unit 50 performs an ejection process under the control of the controller 90.

In the ejection process, the ejector motor 51 is driven to move the ejector rod 53 forward at a set speed, and thus, the movable member 35 moves forward or the molding product is ejected. Thereafter, the ejector motor 51 is driven to move the ejector rod 53 backward at a set speed, and thus, the movable member 35 moves backward to an original position. For example, a position or speed of the ejector rod 53 is detected using an encoder 51a of the ejector motor 51. The encoder 51a detects the rotation of the ejector motor 51 and sends signals indicating the detection results to the controller 90.

Next, the injection unit 40 will be described. Unlike the descriptions of the mold clamping unit 10, in descriptions of the injection unit 40, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward or backward with respect to the frame Fr, and is movable forward or backward with respect to the mold unit 30. The injection unit 40 comes into contact with the mold unit 30, and fills the cavity space 34 inside the mold unit 30 with the molding material. The molding material filling the cavity space 34 is cooled and solidified, and thus, a molding product is obtained. For example, the injection unit 40 includes a cylinder 41, a nozzle 42, the screw 43, a cooler 44, a plasticizing motor 45, an injection motor 46, a pressure detector 47, a heater 48, and a temperature detector 49.

The cylinder 41 heats the molding material which is supplied from a supply port 41a to the inner portion of the cylinder 41. The supply port 41a is formed on the rear portion of the cylinder 41. The cooler 44 such as a water cooling cylinder is provided on the outer periphery of the rear portion of the cylinder 41. A heater 48 such as a band heater and the temperature detector 49 are provided on the outer periphery of the cylinder 41 on the front side of the cooler 44.

The cylinder 41 is divided into a plurality of zones in an axial direction (right and left directions in Figs. 1 and 2) of the cylinder 41. The heater 48 and the temperature detector 49 are provided in each zone. The controller 90 controls the heater 48 such that a detection temperature of the temperature detector 49 for each zone becomes a set temperature.

The nozzle 42 is provided on the front end portion of the cylinder 41 and presses the mold unit 30. The heater 48 and the temperature detector 49 are provided on the outer periphery of the nozzle 42. The controller 90 controls the heater 48 such that a detection temperature of the nozzle 42 becomes a set temperature.

The screw 43 is disposed in the cylinder 41 so as to be rotatable and movable forward or backward. If the screw 43 rotates, the molding material is fed forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward. Thereafter, if the screw 43 moves forward, the molding material in front of the screw 43 is injected from the nozzle 42 and fills the inside of the mold unit 30.

The plasticizing motor 45 rotates the screw 43.

The injection motor 46 moves the screw 43 forward or backward. The rotary motion of the injection motor 46 is converted into the linearmotion of the screw 43 by the motion conversionmechanism such as a ball screw.

The pressure detector 47 is provided on a force transmission path between the injection motor 46 and the screw 43 and detects a load applied to the pressure detector 47. The pressure detector 47 sends signals indicating the detection results to the controller 90. The detection results of the pressure detector 47 are used to control or monitor a pressure received by the screw 43 from the molding material, a back pressure with respect to the screw 43, a pressure applied from the screw 43 to the molding material, or the like.

The injection unit 40 performs a filling process, a holding pressure process, a plasticizing process, or the like under the control of the controller 90.

In the filling process, the injection motor 46 is driven to move the screw 43 forward at a set speed, and the cavity space 34 inside the mold unit 30 is filled with the liquid molding material accumulated in front of the screw 43. For example, a position or speed of the screw 43 is detected using an encoder 46a of the injection motor 46. The encoder 46a detects the rotation of the injection motor 46 and sends signals indicating the detection results to the controller 90. If the position of the screw 43 reaches a set position, switching (so called V/P switching) from the filling process to the holding pressure process is performed. The set speed of the screw 43 may be changed according to the position of the screw 43, the time, or the like.

Moreover, in the filling process, after the position of the screw 43 reaches the set position, the screw 43 may temporarily stop at the set position, and thereafter, the V/P switching may be performed. Immediately before the V/P switching, instead of stopping the screw 43, the screw 43 may move forward or may move backward at a very slow speed.

In the holding pressure process, the injection motor 46 is driven to press the screw 43 forward at a set pressure, and a pressure is applied to the molding material inside the mold unit 30. Accordingly, insufficient molding materials caused by cooling shrinkage can be replenished. For example, the pressure of the molding material is detected using the pressure detector 47. The pressure detector 47 sends signals indicating the detection results to the controller 90.

In the holding pressure process, the molding material inside the cavity space 34 is gradually cooled, and when the holding pressure process is completed, the inlet of the cavity space 34 is closed by the molding material which is solidified. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process maybe performed during the cooling process.

In the plasticizing process, the plasticizing motor 45 is driven to rotate the screw 43 at a set rotating speed and the molding material is fed forward along the spiral grooves of the screw 43 by the screw 43. According to this, the molding material is gradually melted. The screw 43 moves backward as the liquid molding material is fed to the front side of the screw 43 and is accumulated in front of the cylinder 41. For example, the rotating speed of the screw 43 is detected using an encoder 45a of the plasticizing motor 45. The encoder 45a sends signals indicating the detection results to the controller 90.

In the plasticizing process, in order to restrict an abrupt backward movement of the screw 43, the injection motor 46 may be driven so as to apply a set back pressure to the screw 43. For example, the back pressure with respect to the screw 43 is detected using the pressure detector 47. The pressure detector 47 sends signals indicating the detection results to the controller 90. If the screw 43 moves backward to the set position and a predetermined amount of the molding materials is accumulated in front of the screw 43, the plasticizing process ends.

As shown in Figs. 1 and 2, the controller 90 includes a Central Processing Unit (CPU) 91, a recording medium 92 such as a memory, an input interface 93, and an output interface 94. The controller 90 executes a program stored in the recording medium 92 using the CPU 91 to perform various controls. In addition, the controller 90 receives signals from the outside using an input interface 93 and sends the signals to the outside using the output interface 94.

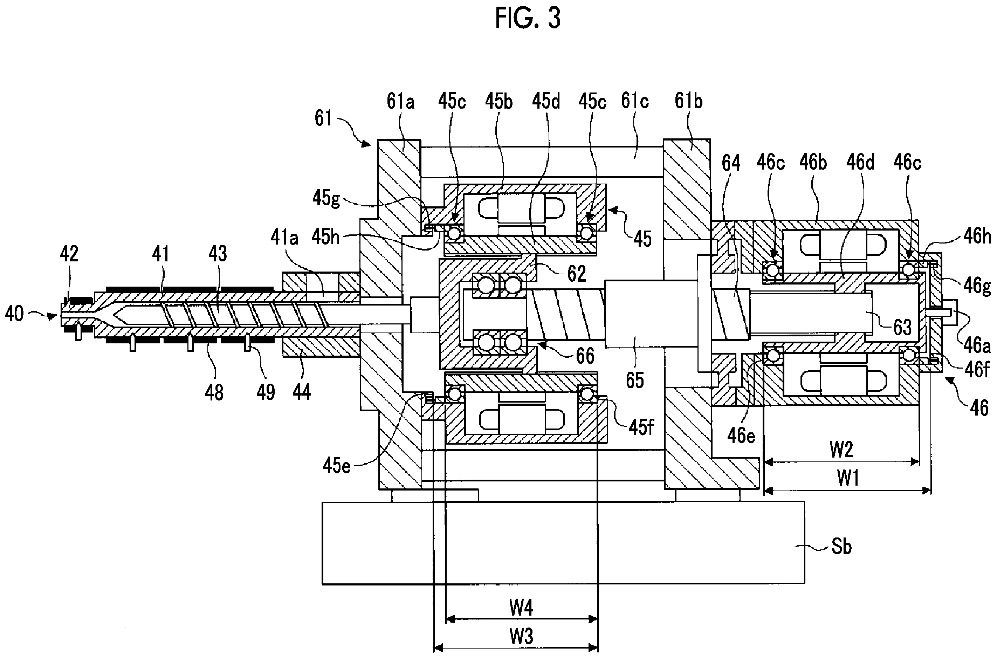

Fig. 3 is a view showing an injection unit according to the embodiment. The injection unit 40 includes an injection frame 61, a plasticizing drive shaft 62, an injection drive shaft 63, or the like in addition to the cylinder 41, the screw 43, the plasticizing motor 45, the injection motor 46, or the like.

The injection frame 61 is fixed to the slide base Sb. The cylinder 41, the plasticizing motor 45, the injection motor 46, and the screw nut 65 which is screwed to the screw shaft 64 of the injection drive shaft 63 are fixed to the injection frame 61.

For example, the injection frame 61 includes a front support 61a, a rear support 61b which is provided behind the front support 61a, and a connection rod 61c which connects the front support 61a and the rear support 61b to each other. The cylinder 41 and the plasticizing motor 45 are fixed to the front support 61a. The injection motor 46 and the screw nut 65 are fixed to the rear support 61b.

The plasticizing motor 45 includes a stator 45b which is fixed to the injection frame 61, bearings 45c which are held to the stator 45b, and a rotor 45d which is rotatably supported by the bearings 45c. The plasticizing drive shaft 62 which rotates and moves linearly by the rotary motion of the rotor 45d is disposed on the inner peripheral side of the rotor 45d.

The plasticizing drive shaft 62 is splined to the rotor 45d of the plasticizing motor 45 and is rotationally restrained by the rotor 45d. Specifically, the plasticizing drive shaft 62 includes a plurality of keys at intervals in a circumferential direction on the outer periphery and the rotor 45d includes a plurality of key grooves into which the plurality of keys are inserted in a slidable manner on the inner periphery. In addition, one key or one key groove may be provided.

If the plasticizing motor 45 is driven, the plasticizing drive shaft 62 or the screw 43 rotates. Accordingly, the molding material is fed forward along the spiral grooves of the screw 43. The screw 43 or the plasticizing drive shaft 62 moves backward as the molding material is fed to the front side of the screw 43 and accumulated in front of the cylinder 41. Accordingly, if the plasticizing motor 45 is driven, and the plasticizing drive shaft 62 moves backward while rotating.

The injection motor 46 includes a stator 46b which is fixed to the injection frame 61, bearings 46c which are held to the stator 46b, and a rotor 46d which is rotatably supported by the bearings 46c. The injection drive shaft 63 which rotates and moves linearly by the rotary motion of the rotor 46d is disposed on the inner peripheral side of the rotor 46d.

The injection drive shaft 63 is splined to the rotor 46d of the injection motor 46 and is rotationally restrained by the rotor 46d. The injection drive shaft 63 includes the screw shaft 64 and the screw nut 65 screwed to the screw shaft 64 is fixed to the injection frame 61. Accordingly, if the injection motor 46 is driven, the injection drive shaft 63moves forwardorbackward while rotating. A ball or a roller may be interposed between the screw shaft 64 and the screw nut 65.

The front end portion of the injection drive shaft 63 is rotatably supported by a bearing 66 by which the plasticizing drive shaft 62 is held. An outer ring of the bearing 66 is fixed to the inner peripheral side of the tubular plasticizing drive shaft 62 and an inner ring of the bearing 66 is fixed to the outer peripheral side of the injection drive shaft 63. Accordingly, it is possible to prevent transmission of the rotary motion from the injection drive shaft 63 to the plasticizing drive shaft 62. If the injection motor 46 is driven and the injection drive shaft 63 moves forward or backward while rotating, the plasticizing drive shaft 62 or the screw 43 moves forward or backward.

Meanwhile, if the injection motor 46 is driven, the injection drive shaft 63 linearly moves with respect to the rotor 46d while the rotor 46d and the injection drive shaft 63 come into contact with each other in a tangential direction of the rotary motion. Accordingly, the rotor 46d or the bearing 46c is pulled so as to slide by the linear motion.

In addition, the stator 46b of the injection motor 46 includes a front wall surface 46e which presses the front bearing 46c (hereinafter, simply referred to as a "front bearing 46c") of the two bearings 46c from the front side and a rear wall surface 46f which presses the rear bearing 46c (hereinafter, simply referred to as a "rear bearing 46c") of the two bearings 46c from the rear side. The movements of the bearing 46c toward both sides such as the front side and the rear side can be restricted by the front wall surface 46e and the rear wall surface 46f.

However, in order to secure assembling properties of the injection motor 46, a gap W1 between the front wall surface 46e and the rear wall surface 46f is set to be larger than a gap W2 between the front end surface of the front bearing 46c and the rear end surface of the rear bearing 46c.

In addition, the injection motor 46 includes a biasing member 46g which biases the bearing 46c with respect to the stator 46b toward the front side in the axial direction. The biasing member 46g may not abut on the inner ring of the bearing 46c and may abut on the outer ring of the bearing 46c so as not to rotate.

For example, as the biasing member 46g, a spring such as a coil spring is used. A plurality of springs maybe symmetrically disposed about a center line of the bearing 46c or one spring may be provided along the entire circumferential direction of the bearing 46c. In addition, the spring may be a disc spring or the like.

Moreover, as the biasing member 46g, a rubber plate or the like may be used. A plurality of rubber plates may be symmetrically disposed about the center line of the bearing 46c or one rubber plate may be provided along the entire circumferential direction of the bearing 46c. In the latter case, the shape of the rubber plate may be a ring shape.

According to the invention, a biasing force of the biasing member 46g is toward the front side, as shown Fig. 3, a gap between the front bearing 46c and the front wall surface 46e is not present. Accordingly, even when a forward thrust force acts on the bearing 46c, the bearing 46c does not move forward. In addition, the movement of the bearing 46c toward the rear side can be restricted by the forward biasing force. Therefore, vibrations of the bearing 46c can be decreased, and failures caused by the vibrations, for example, damages of the encoder 46a generated by impact, occurrence of impulsive noise, or the like can be prevented.

According to an example that is not part of the invention, the biasing force of the biasing member 46g may be toward the rear side. In this case, a gap between the rear bearing 46c and the rear wall surface 46f is not present. Accordingly, even when a backward thrust force acts on the bearing 46c, the bearing 46c does not move backward. In addition, the movement of the bearing 46c toward the front side can be restricted by the backward biasing force. Also in the case, vibrations of the bearing 46c can be decreased, and failures caused by the vibrations, for example, damages of the encoder 46a generated by impact, occurrence of impulsive noise, or the like can be prevented.

The injection motor 46 has a ring-shaped member 46h between the bearing 46c and the biasing member 46g. The biasing force of the biasing member 46g acts on the bearing 46c via the ring-shaped member 46h. The biasing force can be distributed in the entire circumferential direction by the ring-shaped member 46h.

The direction of the thrust force acting on the bearing 46c is a linear motion direction of the injection drive shaft 63. In the filling process, the injection drive shaft 63 moves forward while rotating. Therefore, the forward thrust force acts on the bearing 46c. Meanwhile, in the plasticizing process, the injection drive shaft 63 moves backward while rotating, the backward thrust force acts on the bearing 46c.

Moreover, the magnitude of the thrust force acting on the bearing 46c is proportional to a product of a friction coefficient and a tangential force. The tangential force is proportional to torque of the injection motor 46. Accordingly, the tangential force increases and the thrust force increases as the torque of the injection motor 46 increases.

In general, the torque of the injection motor 46 in the plasticizing process is smaller than the torque of the injection motor 46 in the fillingprocess. Accordingly, the backward thrust force acting on the bearing 46c in the plasticizing process is smaller than the forward thrust force acting on the bearing 46c in the filling process.

Accordingly, the biasing member 46g biases the bearing 46c with respect the stator 46b in an injection direction (here, forward). The forward biasing force is intended to counteract the backward thrust force, and thus, the backward thrust force is smaller than the forward thrust force.

The biasing member 46g installed behind the rear bearing 46c and may be in a compressed state rather than a natural state such that the bearing 46c is biased forward by an elastic restoring force of the biasing member 46g. According to an example that is not part of the invention, the biasing member 46g may be installed in front of the front bearing 46c in an extended state rather than a natural state such that the bearing 46c is biased forward by an elastic restoring force of the biasing member 46g.

From the viewpoint of durability of the biasing member 46g, the biasing member 46g may be used in a compressed state. Meanwhile, from the viewpoint of assembling properties of the injection motor 46, the biasing member 46g may be used in an extended state. The assembly of the injection motor 46 is performed in a state where the encoder 46a faces downward and lower parts are assembled before upper parts. By delaying the order of the assembly of biasing member 46g, it is possible to easily secure clearance for assembly.

The biasing force of the biasing member 46g is set to be larger than the thrust force acting on the bearing 46c in a direction opposite to that of the biasing force. The bearing 46c does not move forward and backward. Accordingly, in order to decrease a required biasing force as much as possible, the biasing member 46g biases the bearing 46c with respect to the stator 46b in the injection direction (here, forward). As described above, the forward biasing force is intended to counteract the backward thrust force, and thus, the backward thrust force is smaller than the forward thrust force.

In addition, in the present embodiment, the front wall surface 46e is provided in front of the front bearing 46c. According to an example that is not part of the invention, the front wall surface 46e may be provided in front of the rear bearing 46c. Moreover, in the present embodiment, the rear wall surface 46f is provided behind the rear bearing 46c. According to an example that is not part of the invention, the rear wall surface 46f may be provided behind the front bearing 46c. In addition, in the present embodiment, the number of the bearings 46c is two. According to an example that is not part of the invention, the number of the bearings 46c may be one or three or more.

Meanwhile, if the plasticizing motor 45 is driven, the plasticizing drive shaft 62 linearly moves with respect to the rotor 45d while the rotor 45d and the plasticizing drive shaft 62 come into contact with each other in a tangential direction of the rotary motion. Accordingly, the rotor 45d or the bearing 45c is pulled so as to slide by the linear motion.

In addition, the stator 45b of the plasticizing motor 45 includes a front wall surface 45e which presses the front bearing 45c (hereinafter, simply referred to as a "front bearing 45c") of the two bearings 45c from the front side and a rear wall surface 45f which presses the rear bearing 45c (hereinafter, simply referred to as a "rear bearing 45c") of the two bearings 45c from the rear side. The movements of the bearing 45c toward both sides such as the front side and the rear side can be restricted by the front wall surface 45e and the rear wall surface 45f.

However, in order to secure assembling properties of the plasticizing motor 45, a gap W3 between the front wall surface 45e and the rear wall surface 45f is set to be larger than a gap W4 between the front end surface of the front bearing 45c and the rear end surface of the rear bearing 45c.

In addition, the plasticizing motor 45 includes a biasing member 45g which biases the bearing 45c with respect to the stator 45b toward one side in the axial direction. The biasing member 45g may not abut on the inner ring of the bearing 45c and may abut on the outer ring of the bearing 45c so as not to rotate.

For example, as the biasing member 45g, a spring such as a coil spring is used. A plurality of springs maybe symmetrically disposed about a center line of the bearing 45c or one spring may be provided along the entire circumferential direction of the bearing 45c. In addition, the spring may be a disc spring or the like.

Moreover, as the biasing member 45g, a rubber plate or the like may be used. A plurality of rubber plates may be symmetrically disposed about the center line of the bearing 45c or one rubber plate may be provided along the entire circumferential direction of the bearing 45c. In the latter case, the shape of the rubber plate may be a ring shape.

For example, a biasing force of the biasing member 45g is toward the rear side, as shown in Fig. 3, a gap between the rear bearing 45c and the rear wall surface 45f is not present. Accordingly, even when a backward thrust force acts on the bearing 45c, the bearing 45c does not move backward. In addition, the movement of the bearing 45c toward the front side can be restricted by the backward biasing force. Therefore, vibrations of the bearing 45c can be decreased, and failures caused by the vibrations, for example, damages of the encoder 45a generated by impact, occurrence of impulsive noise, or the like can be prevented.

Moreover, the biasing force of the biasing member 45g may be toward the front side. In this case, a gap between the front bearing 45c and the front wall surface 45e is not present. Accordingly, even when a forward thrust force acts on the bearing 45c, the bearing 45c does not move forward. In addition, the movement of the bearing 45c toward the rear side can be restricted by the forward biasing force. Also in the case, vibrations of the bearing 45c can be decreased, and failures caused by the vibrations, for example, damages of the encoder 45a generated by impact, occurrence of impulsive noise, or the like can be prevented.

The plasticizing motor 45 may have a ring-shaped member 45h between the bearing 45c and the biasing member 45g. The biasing force of the biasing member 45g acts on the bearing 45c via the ring-shaped member 45h. The biasing force can be distributed in the entire circumferential direction by the ring-shaped member 45h.

In addition, the present invention may be applied to any one of the injection motor 46 and the plasticizing motor 45.

In the present embodiment, the injection unit 40 is an inline-screw type injection unit and the screw 43 corresponds to an injection member described in claims. In addition, the injection unit 40 may be a preplasticizing type injection unit.

The preplasticizing type injection unit supplies molten molding material inside a plasticizing cylinder to an injection cylinder and injects the molding material from the injection cylinder into the mold unit. A screw is disposed to be rotatable and movable forward or backward in the plasticizing cylinder and a plunger is disposed to be movable forward or backward in the injection cylinder. In the case of the preplasticizing type injection unit, the plunger corresponds to the injection member described in claims.

Hereinbefore, embodiments of the injection molding machine are described. However, the present invention is not limited to the embodiments or the like, and various modifications and improvements can be applied within a scope of the present invention described in claims.

The present invention is also applied to the ejector unit 50. The ejector motor 51 includes a stator which is fixed to the movable platen 13, a bearing which is held to the stator, and a rotor which is rotatably supported by the bearing. An ejector drive shaft which rotates and moves linearly by the rotary motion of the rotor is disposed on the inner peripheral side of the rotor.

The ejector drive shaft is splined to the rotor of the ejector motor 51 and is rotationally restrained by the rotor. The ejector drive shaft includes a screw shaft of the motion conversion mechanism 52 and a screw nut screwed to the screw shaft is fixed to the movable platen 13. Accordingly, if the ejector motor 51 is driven, the ejector drive shaft moves forward or backward while rotating.

The front end portion of the ejector drive shaft is rotatably supported by a bearing held by a bearing holder. Therefore, it is possible to prevent the rotary motion from being transmitted from the ejector drive shaft to the bearing holder. If the ejector motor 51 is driven and the ejector drive shaft moves forward or backward while rotating, the bearing holder moves forward or backward. The rear end portion of the ejector rod 53 is connected to the bearing holder and the ejector rod 53 moves forward or backward along with the bearing holder.

Meanwhile, if the ejector motor 51 is driven, the ejector drive shaft linearly moves with respect to the rotor while the rotor and the ejector drive shaft come into contact with each other in a tangential direction of the rotarymotion. Accordingly, the rotor or the bearing is pulled so as to slide by the linear motion.

Moreover, similarly to the injection motor 46, the ejector motor 51 may include a biasing member which biases the bearing with respect to the stator toward one side in the axial direction. When the ejector drive shaft is driven, it is possible to decrease vibrations in the bearing of the ejector motor 51.

In addition, similarly to the injection motor 46, the ejector motor 51 may further have a ring-shaped member disposed between the bearing and the biasing member. The biasing force of the biasing member acts on the bearing via the ring-shaped member.

A direction of a thrust force acting on the bearing of the ejector motor 51 is a linear motion direction of the ejector drive shaft. If the ejector drive shaft moves forward while rotating in order to move the ejector rod 53 forward, a forward thrust force acts on the bearing. Meanwhile, if the ejector drive shaft moves backward while rotating in order to move the ejector rod 53 backward, a backward thrust force acts on the bearing.

Moreover, the magnitude of the thrust force acting on the bearing of the ejector motor 51 is proportional to a product of a friction coefficient and a tangential force. The tangential force is proportional to torque of the ejector motor 51. Accordingly, the tangential force increases and the thrust force increases as the torque of the ejector motor 51 increases.

Compared to when the ejector rod 53 moves forward while the molding product is separated from the mold unit 30, when the ejector rod 53 moves backward, the torque of the ejector motor 51 is smaller. Accordingly, the backward thrust force acting on the bearing of the ejector motor 51 when the ejector rod 53 moves backward is smaller than the forward thrust force acting on the bearing of the ejector motor 51 when the ejector rod 53 moves forward.

In addition, the biasing member may bias the bearing of the ejector motor 51 with respect to the stator of the ejector motor 51 in a protrusion direction (here, forward). The forward biasing force is intended to counteract the backward thrust force, and thus, the backward thrust force is smaller than the forward thrust force.

The present invention is also applied to the mold clamping unit 10. The mold clamping motor 25 includes a stator which is fixed to the toggle support 15, a bearing which is held to the stator, and a rotor which is rotatably supported by the bearing. A mold clamping drive shaft which rotates and moves linearly by the rotary motion of the rotor is disposed on the inner peripheral side of the rotor.

The mold clamping drive shaft is splined to the rotor of the mold clamping motor 25 and is rotationally restrained by the rotor. The mold clamping drive shaft includes a screw shaft of the motion conversion mechanism 26 and a screw nut screwed to the screw shaft is fixed to the toggle support 15. Accordingly, if the mold clamping motor 25 is driven, the mold clamping drive shaft moves forward or backward while rotating.

The front end portion of the mold clamping drive shaft is rotatably supported by a bearing held by the crosshead 21. Therefore, it is possible to prevent the rotary motion from being transmitted from the mold clamping drive shaft to the crosshead 21. If the mold clamping motor 25 is driven and the mold clamping drive shaft moves forward or backward while rotating, the crosshead 21 moves forward or backward and the movable platen 13 moves forward or backward.

Meanwhile, if the mold clamping motor 25 is driven, the mold clamping drive shaft linearly moves with respect to the rotor while the rotor and the mold clamping drive shaft come into contact with each other in a tangential direction of the rotary motion. Accordingly, the rotor or the bearing is pulled so as to slide by the linear motion.

Moreover, similarly to the injection motor 46, the mold clamping motor 25 may include a biasing member which biases the bearing with respect to the stator toward one side in the axial direction. When the mold clamping drive shaft is driven, it is possible to decrease vibrations in the bearing of the mold clamping motor 25.

Moreover, similarly to the injection motor 46, the mold clamping motor 25 may further have a ring-shaped member disposed between the bearing and the biasing member. The biasing force of the biasing member acts on the bearing via the ring-shaped member.

The mold clamping unit 10 of the above-described embodiment is a horizontal type mold clamping unit in which the mold opening and closing directions are horizontal directions. However, the mold clamping unit 10 may be a vertical type mold clamping unit in which the mold opening and closing directions are vertical directions. The vertical type mold clamping unit includes a lower platen, an upper platen, a toggle support, a tie bar, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen. The toggle mechanism is disposed between the toggle support and the lower platen and lifts or lowers the lower platen relative to the toggle support. The mold clamping motor operates the toggle mechanism. The tie bar is parallel to the vertical direction, penetrates the lower platen, and connects the upper platen and the toggle support to each other.

### Brief Description of the Reference Symbols

10: mold clamping unit
12: stationary platen
13: movable platen
25: mold clamping motor
30: mold unit
32: stationary mold
33: movable mold
40: injection unit
41: cylinder
43: screw
45: plasticizing motor
45b: stator
45c: bearing
45d: rotor
45g: biasing member
46h: ring-shaped member
46: injection motor
46b: stator
46c: bearing
46d: rotor
46g: biasing member
46h: ring-shaped member
50: ejector unit
51: ejector motor
53: ejector rod
62: plasticizing drive shaft
63: injection drive shaft
90: controller

## Claims

1. An injection molding machine, comprising:
an injection unit (40) comprising a cylinder (41), a nozzle (42), an injection motor (46), and an injection member (43),
wherein the injection unit (40) is configured to perform a filling process and a plasticizing process,
the cylinder (41) is configured to heat a molding material,
the nozzle (42) is provided at a front end of the cylinder (41),
the injection member (43) is arranged inside the cylinder (41),
the molding material in front of the injection member (43) is injected from the nozzle (42) when the injection member (43) moves forward in an injection direction,
the injection motor (46) is configured to move an injection drive shaft (63) forward and backward while rotating, and move the injection member (43) forward and backward,
the injection motor (46) includes a stator (46b), a front bearing (46c) and a rear bearing (46c) which are held to the stator (46b), a rotor (46d) which is rotatably supported by the bearings (46c), and a biasing member (46g) configured to bias the rear bearing (46c) with respect to the stator (46b) forward in the injection direction,
the drive shaft (63) is splined to the rotor (46d) of the injection motor (46),
the biasing member (46g) is disposed between the rear bearing (46c) and a rear wall surface (46f) of the injection motor (46), and a gap (W1) between a front wall surface (46e) of the injection motor (46) and the rear wall surface(46f) of the injection motor (46) is set to be larger than a gap(W2) between a front end surface of the front bearing (46c) and a rear end surface of the rear bearing (46c), and there is no gap between the front end surface of the front bearing (46c) and a front wall surface (46e) of the injection motor (46),
the injection motor (46) is driven to move the injection member (43) and the injection drive shaft (63) backward during the plasticizing process, in which a backward thrust force acts on the bearings (46c),
a biasing force of the biasing member (46g) is set to be larger than the backward thrust force acting on the rear bearing (46c) in a direction opposite to that of the biasing force during the plasticizing process,
the injection motor (46) includes a ring-shaped member (46h) which is disposed between the rear bearing (46c) and the biasing member (46g), and
a biasing force of the biasing member (46g) acts on the rear bearing (46c) via the ring-shaped member (46h).

2. The injection molding machine according to claim 1,
wherein the biasing member (46g) biases the rear bearing (46c) of the injection motor (46) with respect to the stator (46b) of the injection motor (46) in the injection direction.

3. The injection molding machine according to claim 1, further comprising:
a plasticizing motor (45) which rotates the injection member (43); and
a plasticizing drive shaft (62) in which a rotation of the plasticizing motor (45) is transmitted,
wherein the plasticizing motor (45) includes a stator (45b), a bearing (45c) which is held to the stator (45b), a rotor (45d) which is rotatably supported by the bearing (45c), and a biasing member (45g) configured to bias the bearing (45c) with respect to the stator (45b) toward an opposite side to the injection direction,
the plasticizing drive shaft (62) is splined to the rotor (45d) of the plasticizing motor (45),
a biasing force of the biasing member (45g) is set to be larger than a thrust force acting on the bearing (45c) in a direction opposite to that of the biasing force,
the plasticizing motor (45) includes a ring-shaped member (45h) which is disposed between the bearing (45c) and the biasing member (45g), and
a biasing force of the biasing member (45g) acts on the bearing (45c) via the ring-shaped member (45h).

## Patentansprüche

1. Spritzgießmaschine, umfassend:
eine Einspritzeinheit (40) umfassend einen Zylinder (41), eine Düse (42), einen Einspritzmotor (46) und ein Einspritzelement (43),
wobei die Einspritzeinheit (40) konfiguriert ist, einen Füllvorgang und einen Plastifiziervorgang durchzuführen,
der Zylinder (41) zum Erwärmen eines Formmaterials konfiguriert ist,
die Düse (42) an einem vorderen Ende des Zylinders (41) vorgesehen ist,
das Einspritzelement (43) innerhalb des Zylinders (41) angeordnet ist,
das Formmaterial vor dem Einspritzelement (43) aus der Düse (42) eingespritzt wird, wenn sich das Einspritzelement (43) in einer Einspritzrichtung vorwärts bewegt,
der Einspritzmotor (46) konfiguriert ist, eine Einspritzantriebswelle (63) vorwärts und rückwärts zu bewegen während Drehen und das Einspritzelement (43) vorwärts und rückwärts zu bewegen,
der Einspritzmotor (46) einen Stator (46b), ein vorderes Lager (46c) und ein hinteres Lager (46c), die an dem Stator (46b) gehalten werden, einen Rotor (46d), der von den Lagern (46c) drehbar gelagert ist, und ein Vorspannelement (46g) , das konfiguriert ist, das hintere Lager (46c) in Bezug auf den Stator (46b) in der Einspritzrichtung nach vorne vorzuspannen,
die Antriebswelle (63) mit dem Rotor (46d) des Einspritzmotors (46) verzahnt ist,
das Vorspannelement (46g) zwischen dem hinteren Lager (46c) und einer hinteren Wandfläche (46f) des Einspritzmotors (46) angeordnet ist, und ein Spalt (W1) zwischen einer vorderen Wandfläche (46e) des Einspritzmotors (46) und der hinteren Wandfläche (46f) des Einspritzmotors (46) größer eingestellt ist als ein Spalt (W2) zwischen einer vorderen Endfläche des vorderen Lagers (46c) und einer hinteren Endfläche des hinteren Lagers (46c), und es keinen Spalt zwischen der vorderen Endfläche des vorderen Lagers (46c) und einer vorderen Wandfläche (46e) des Einspritzmotors (46)gibt,
der Einspritzmotor (46) so angetrieben wird, dass er das Einspritzelement (43) und die Einspritzantriebswelle (63) während des Plastifiziervorgangs rückwärts bewegt, wobei eine Rückwärtsdruckkraft auf die Lager (46c) wirkt,
eine Vorspannkraft des Vorspannelements (46g) so eingestellt ist, dass sie größer ist als die Rückwärtsdruckkraft, die während des Plastifiziervorgangs in einer Richtung entgegengesetzt zu der der Vorspannkraft auf das hintere Lager (46c) wirkt,
der Einspritzmotor (46) ein ringförmiges Element (46h) umfasst, das zwischen dem hinteren Lager (46c) und dem Vorspannelement (46g) angeordnet ist, und
eine Vorspannkraft des Vorspannelements (46g) via das ringförmige Element (46h) auf das hintere Lager (46c) wirkt.

2. Spritzgießmaschine nach Anspruch 1,
wobei das Vorspannelement (46g) das hintere Lager (46c) des Einspritzmotors (46) in Bezug auf den Stator (46b) des Einspritzmotors (46) in der Einspritzrichtung vorspannt.

3. Spritzgießmaschine nach Anspruch 1, die ferner umfasst:
einen Plastifiziermotor (45), der das Einspritzelement (43) dreht; und
eine Plastifizierantriebswelle (62), durch die eine Drehung des Plastifiziermotors (45) übertragen wird,
wobei der Plastifiziermotor (45) einen Stator (45b), ein Lager (45c), das an dem Stator (45b) gehalten wird, einen Rotor (45d), der durch das Lager (45c) drehbar gelagert ist, und ein Vorspannelement (45g), das konfiguriert ist, das Lager (45c) in Bezug auf den Stator (45b) zu einer zu der Einspritzrichtung entgegengesetzten Seite vorzuspannen,
die Plastifizierantriebswelle (62) mit dem Rotor (45d) des Plastifiziermotors (45) verzahnt ist,
eine Vorspannkraft des Vorspannelements (45g) so eingestellt ist, dass sie größer ist als eine auf das Lager (45c) wirkende Druckkraft in einer Richtung entgegengesetzt zu der der Vorspannkraft,
der Plastifiziermotor (45) ein ringförmiges Element (45h) umfasst, das zwischen dem Lager (45c) und dem Vorspannelement (45g) angeordnet ist, und
eine Vorspannkraft des Vorspannelements (45g) via das ringförmige Element (45h) auf das Lager (45c) wirkt.

## Revendications

1. Une machine de moulage par injection, comprenant :
une unité d'injection (40) comprenant un cylindre (41), une buse (42), un moteur d'injection (46) et un élément d'injection (43),
dans laquelle l'unité d'injection (40) est configurée pour effectuer un processus de remplissage et un processus de plastification,
le cylindre (41) est configuré pour chauffer un matériau de moulage,
la buse (42) est prévue au niveau d'une extrémité avant du cylindre (41),
l'élément d'injection (43) est prévu à l'intérieur du cylindre (41),
le matériau de moulage en face de l'élément d'injection (43) est injecté par la buse (42) lorsque l'élément d'injection (43) avance dans une direction d'injection,
le moteur d'injection (46) est configuré pour déplacer un arbre d'entraînement d'injection (63) en avant et en arrière tout en tournant, et pour déplacer l'élément d'injection (43) en avant et en arrière,
le moteur d'injection (46) comprend un stator (46b), un roulement avant (46c) et un roulement arrière (46c) qui sont maintenus sur le stator (46b), un rotor (46d) qui est supporté de manière rotative par les roulements (46c), et un élément de sollicitation (46g) configuré pour actionner le roulement arrière (46c) par rapport au stator (46b) en marche avant dans la direction d'injection,
l'arbre d'entraînement (63) est cannelé sur le rotor (46d) du moteur d'injection (46),
l'élément de sollicitation (46g) est disposé entre le roulement arrière (46c) et une surface de paroi arrière (46f) du moteur d'injection (46), et un espace (W1) entre une surface de paroi avant (46e) du moteur d'injection (46) et la surface de paroi arrière (46f) du moteur d'injection (46) est défini comme étant plus grand qu'un espace (W2) entre une surface d'extrémité avant du roulement avant (46c) et une surface d'extrémité arrière du roulement arrière (46c), et il n'y a aucun espace entre la surface d'extrémité avant du roulement avant (46c) et une surface de paroi avant (46e) du moteur d'injection (46),
le moteur d'injection (46) est entraîné afin de déplacer l'élément d'injection (43) et l'arbre d'entraînement d'injection (63) en arrière pendant le processus de plastification, au cours duquel une force de poussée vers l'arrière agit sur les roulements (46c),
une force de sollicitation de l'élément de sollicitation (46g) est définie comme étant supérieure à la force de poussée vers l'arrière qui agit sur le roulement arrière (46c) dans une direction opposée à celle de la force de sollicitation pendant le processus de plastification,
le moteur d'injection (46) comprend un élément en forme de bague (46h) qui est disposé entre le roulement arrière (46c) et l'élément de sollicitation (46g), et
une force de sollicitation de l'élément de sollicitation (46g) agit sur le roulement arrière (46c) via l'élément en forme de bague (46h).

2. La machine de moulage par injection selon la revendication 1,
dans laquelle l'élément de sollicitation (46g) sollicite le roulement arrière (46c) du moteur d'injection (46) par rapport au stator (46b) du moteur d'injection (46) dans la direction d'injection.

3. La machine de moulage par injection selon la revendication 1, comprenant en outre :
un moteur de plastification (45) qui fait tourner l'élément d'injection (43) ; et
un arbre d'entraînement de plastification (62) dans lequel une rotation du moteur de plastification (45) est transmise,
dans laquelle le moteur de plastification (45) comprend un stator (45b), un roulement (45c) qui est maintenu sur le stator (45b), un rotor (45d) qui est supporté de manière rotative par le roulement (45c), et un élément de sollicitation (45g) configuré pour solliciter le roulement (45c) par rapport au stator (45b) vers un côté opposé à la direction d'injection,
l'arbre d'entraînement de plastification (62) est cannelé sur le rotor (45d) du moteur de plastification (45),
une force de sollicitation de l'élément de sollicitation (45g) est définie comme étant supérieure à une force de poussée qui agit sur le roulement (45c) dans une direction opposée à celle de la force de sollicitation,
le moteur de plastification (45) comprend un élément en forme de bague (45h) qui est disposé entre le roulement (45c) et l'élément de sollicitation (45g), et
une force de sollicitation de l'élément de sollicitation (45g) agit sur le roulement (45c) via l'élément en forme de bague (45h).
